(19) Europäisches Patentamt
European Patent Office
Office européen des brevets

(11) EP 3 440 133 B1

(12) FASCICULE DE BREVET EUROPEEN

(45) Date de publication et mention de la délivrance du brevet:
**30.10.2019 Bulletin 2019/44**

(21) Numéro de dépôt: **17720856.8**

(22) Date de dépôt: **07.04.2017**

(51) Int Cl.:
***C08L 77/02*** (2006.01) ***B32B 1/08*** (2006.01)
***E21B 43/01*** (2006.01)

(86) Numéro de dépôt international:
**PCT/FR2017/050839**

(87) Numéro de publication internationale:
**WO 2017/174948 (12.10.2017 Gazette 2017/41)**

# (54) COMPOSITION DE POLYMÈRE THERMOPLASTIQUE ET STABILISANT A BASE DE CUIVRE, SA PRÉPARATION ET SES UTILISATIONS

ZUSAMMENSETZUNG MIT EINEM THERMOPLASTISCHEN POLYMER UND STABILISATOR AUF KUPFERBASIS SOWIE HERSTELLUNG UND VERWENDUNG DAVON

COMPOSITION COMPRISING THERMOPLASTIC POLYMER AND COPPER-BASED STABILIZER, AND PRODUCTION AND USE THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.04.2016 FR 1653123**

(43) Date de publication de la demande:
**13.02.2019 Bulletin 2019/07**

(73) Titulaire: **Arkema France**
**92700 Colombes (FR)**

(72) Inventeurs:
- **BLONDEL, Philippe**
  **27300 BERNAY (FR)**
- **MONTANARI, Thibaut**
  **27300 MENNEVAL (FR)**
- **GLASSON, Fabrice**
  **27170 BEAUMONTEL (FR)**
- **BRIFFAUD, Thierry**
  **27300 BERNAY (FR)**

(56) Documents cités:
**WO-A1-00/22035 WO-A2-2008/122743**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne l'utilisation d'une composition comprenant au moins un stabilisant à base de cuivre avec une matrice comprenant au moins un polymère thermoplastique catalysé, notamment un polyamide semi-cristallin, comme couche d'étanchéité dans un tuyau, en particulier flexible, contenant du pétrole ou du gaz, ce tuyau étant utilisé dans l'exploitation des gisements de pétrole ou de gaz sous la mer (offshore).

La présente invention concerne également la composition telle que ci-dessus définie.

L'invention concerne aussi les structures obtenues à partir desdites compositions.

L'exploitation de gisements pétroliers situés en mer soumet à des conditions extrêmes les matériaux mis en œuvre, et en particulier les tuyaux reliant les différents dispositifs sous-marins de la plate-forme et véhiculant les hydrocarbures extraits, qui sont généralement transportés à haute température et haute pression (par exemple, 700 bars).

Lors du fonctionnement des installations, il se pose donc des problèmes aigus de résistance mécanique, thermique et chimique des matériaux mis en œuvre. De tels tuyaux doivent en particulier résister au pétrole chaud, au gaz, à l'eau et aux mélanges d'au moins deux de ces produits pendant des durées pouvant atteindre 20 ans.

De manière classique, ces tuyaux comprennent une couche intérieure métallique non étanche formée par une bande en métal profilée enroulée en hélice telle qu'un feuillard agrafé. Cette couche intérieure métallique, qui donne la forme au tuyau, est revêtue, en général par extrusion, d'une couche de polymère destinée à conférer l'étanchéité. D'autres couches de protection et/ou de renfort telles que des nappes de fibres métalliques, des thermoplastiques et des caoutchoucs peuvent également être disposées autour de la couche de polymère étanche.

La gaine d'étanchéité en polymère recouvrant la carcasse a généralement un cahier des charges particulièrement difficile à remplir puisqu'elle assure l'étanchéité des tubes alors qu'elle est en contact direct avec les produits transportés en pression et température. Cette gaine doit principalement:

* pouvoir être extrudée en continu, éventuellement sur le support de la carcasse interne,
* être suffisamment souple pour accepter les courbures imposées au flexible pendant les opérations de fabrication, de pose et l'utilisation du flexible sur le site (mouvement de la houle ou relevage du flexible pour un changement de site d'utilisation),
* résister au fluage consécutif aux efforts de pression, aggravés par le niveau de température. Le fluage se produit dans les déjoints (espace ou jeu) entre les armures métalliques (par exemple zêta auto agrafé ou T) sur lesquelles la gaine s'appuie lorsque la conduite est pressurisée par l'effluent transporté,
* être suffisamment stable chimiquement pour que ses caractéristiques mécaniques et son étanchéité ne se dégradent pas de manière rédhibitoire pendant la durée de vie du flexible.

Pour des températures de service en dessous de 40°C, le polymère est du HDPE (polyéthylène haute densité) réticulé ou non. Pour des températures supérieures à 40°C, on utilise du polyamide et, pour des températures supérieures à 90°C, on met en œuvre du PVDF (polyfluorure de vinylidène).

Compte tenu du coût élevé du PVDF, et malgré l'implication de températures plus élevées que celles préconisées, le choix du polymère s'est porté sur les polyamides, tels que le PA11 et le PA12, bien connus pour leur bonne tenue thermique, leur résistance chimique, notamment aux solvants, leur résistance aux intempéries et aux rayonnements, leur imperméabilité aux gaz et aux liquides et leur qualité d'isolants électriques.

Ces polyamides sont déjà couramment utilisés pour la fabrication de tuyaux destinés à véhiculer des hydrocarbures extraits de gisements pétroliers situés sous la mer (offshore) ou non (on-shore) mais présentent toutefois l'inconvénient de vieillir trop vite.

Pour remédier à cet inconvénient et donc améliorer la résistance au vieillissement de ces tuyaux à base de polyamide, le document US 2003/0220449, au nom de la Demanderesse, propose une composition comprenant un mélange de PA, de plastifiant et d'un élastomère choisi parmi le caoutchouc nitrile butadiène (NBR) et le caoutchouc nitrile butadiène hydrogéné (H-NBR).

La mise en œuvre d'un élastomère du type NBR ou H-NBR dans les compositions décrites dans le document US 2003/0220449 présente plusieurs avantages par rapport aux compositions antérieures uniquement à base de polyamide et de plastifiant.

En particulier, l'introduction de l'un ou l'autre de ces élastomères permet d'augmenter de manière significative la résistance au vieillissement des tuyaux flexibles comprenant une telle couche, notamment en limitant la teneur pondérale en plastifiant.

Toutefois, les élastomères H-NBR (ou NBR hydrogénés) ont un coût élevé et nécessitent comme leurs homologues NBR non hydrogénés, de mettre en œuvre une étape préliminaire de broyage, ajoutant encore un surcoût à celui déjà engendré par la matière première NBR ou H-NBR.

Pour remédier aux inconvénients ci-dessus, la demanderesse décrit dans le document WO 08/122743 l'utilisation d'une composition comprenant au moins un polyamide semi-cristallin, une polyoléfine fonctionnalisée et un plastifiant pour la fabrication de tuyaux flexibles utilisés notamment pour l'exploitation des gisements de pétrole ou de gaz. Néanmoins, la durée de vie à l'hydrolyse de ces tuyaux n'est pas toujours suffisante en fonction des conditions d'exploitation des gisements.

Par ailleurs, US 2008/314471 décrit des compositions comprenant un polyamide, un catalyseur et éventuellement des additifs parmi lesquels les stabilisants sont indiqués, ainsi qu'éventuellement un allongeur de chaîne.

Parmi les stabilisants, des sels de cuivre ou un complexe de cuivre sont décrits.

Il est ainsi bien connu de l'art antérieur, notamment du brevet US 5,360,888 que les polyamides peuvent être protégés de la destruction par la chaleur et la lumière à des températures élevées par addition de sels de cuivre, de composés organiques phosphorés, d'antioxydants phénoliques et d'amines aliphatiques ou aromatiques. Les sels de cuivre utilisés sont fréquemment des complexes CuI/KI.

US 5,360,888 décrit plus particulièrement l'utilisation de carbodiimides aromatiques stériquement encombrés pour conférer aux polyamides une résistance à l'hydrolyse à température élevée.

La demande US 2013/0171388 décrit aussi des matériaux PA avec des oligo ou polycarbodiimides. Néanmoins, ces compositions possèdent également des indices de polymolécularité élevés et donc un nombre important de branchements ce qui a pour conséquence l'obtention de viscosités en solution élevées.

Le brevet CA 2347258 décrit l'utilisation de complexes de cuivre et de composés halogénés pour stabiliser les polyamides. Les polyamides préférés sont des PA6 ou PA66. Ce document est totalement silencieux sur la préparation de tuyau offshore ainsi que la température de service et la durée de vie de tels tuyaux.

Cependant, les compositions actuelles en polyamide ne permettent en général qu'une température de service des tuyaux de 60°C à 70°C dépendant du pH ou de l'indice d'acidité totale (TAN) du fluide transporté et du critère d'acceptance utilisé.

Il y a donc nécessité de trouver un compromis entre ces différents paramètres et d'augmenter par ailleurs la température de service des tuyaux ainsi que d'augmenter la tenue thermique tout en conservant une bonne extrudabilité de la composition et les propriétés de flexibilité du tuyau.

Un premier objet de l'invention est donc l'utilisation d'une composition comprenant au moins un stabilisant à base de cuivre avec une matrice comprenant au moins un polymère thermoplastique catalysé, notamment un polyamide semi-cristallin, comme couche d'étanchéité dans un tuyau, en particulier flexible, contenant du pétrole ou du gaz, ce tuyau étant utilisé dans l'exploitation des gisements de pétrole ou de gaz sous la mer (offshore).

Un deuxième objet concerne également la fourniture d'une composition telle que ci-dessus définie.

L'invention concerne aussi la fourniture de structures, notamment de tuyaux, en particulier flexibles, ci-dessus définis.

*UTILISATION*

La présente invention concerne l'utilisation d'une composition comprenant :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'au moins une polyoléfine comprenant une fonction époxy, anhydride ou acide, introduite par greffage ou par copolymérisation, et
- de 3 à 20 % en poids, de préférence de 4 à 12 % en poids, d'au moins un plastifiant,
- de 0,05 à 5% en poids, de préférence de 0,05 à 1% en poids de préférence de 0,1 à 1% en poids d'au moins un stabilisant à base de complexe de cuivre,
- d'au moins un catalyseur,

ladite composition étant dépourvue d'halogénure de métal alcalin et d'oligo- ou poly-carbodiimide,
comme couche d'étanchéité dans un tuyau contenant du pétrole ou du gaz, ce tuyau étant utilisé dans l'exploitation des gisements de pétrole ou de gaz sous la mer (offshore).

Les Inventeurs ont trouvé de façon tout à fait inattendue que l'association d'un complexe de cuivre avec des polyoléfines et des plastifiants permettait, en combinaison avec un polyamide semi-cristallin (PAsc) catalysé, notamment un polyamide, d'obtenir des compositions qui présentent de bonnes propriétés d'extrusion, une excellente meilleure tenue thermique ainsi qu'une température de service des tuyaux améliorée et donc une meilleure résistance à l'hydrolyse.

Dans toute la description, sauf indication contraire, tous les pourcentages indiqués sont des pourcentages en poids.

L'expression "polyamide semi-cristallin" couvre les homopolyamides ainsi que les copolyamides qui présentent à la fois une température de transition vitreuse Tg et une température de fusion Tf.
La nomenclature utilisée pour définir les polyamides est décrite dans la norme ISO 1874-1:1992 "Plastiques -- Matériaux

polyamides (PA) pour moulage et extrusionPartie 1: Désignation", notamment en page 3 (tableaux 1 et 2) et est bien connue de l'homme du métier.

Un polyamide semi-cristallin, au sens de l'invention, désigne un polyamide qui présente une température de fusion (Tf) en DSC selon la norme ISO 11357-3 de 2011, et une enthalpie de cristallisation lors de l'étape de refroidissement à une vitesse de 20K/min en DSC mesurée selon la norme ISO 11357-3 de 2013 supérieure à 30 J/g, de préférence supérieure à 40 J/g.

Sont notamment visés par l'expression "polyamides semi-cristallins" les homopolyamides aliphatiques qui résultent de la condensation :

- d'un lactame,
- d'un acide alpha,omega-aminocarboxylique aliphatique,
- d'une diamine en Ca et d'un diacide en Cb.

Lorsque le polyamide est un motif répondant à la formule (diamine en Ca).(diacide en Cb) Ca et Cb désignant le nombre d'atomes de carbone respectivement dans la diamine et le diacide, le motif (diamine en Ca) est choisi parmi les diamines aliphatiques, linéaires ou ramifiés, les diamines cycloaliphatiques et les diamines alkylaromatiques.

Lorsque la diamine est aliphatique et linéaire, de formule $H_2N-(CH_2)_a-NH_2$, le monomère (diamine en Ca) est préférentiellement choisi parmi la butanediamine (a=4), la pentanediamine (a=5), l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tetradécanediamine (a=14), l'hexadécanediamine (a=16), l'octadécanediamine (a=18), l'octadécènediamine (a=18), l'eicosanediamine (a=20), la docosanediamine (a=22) et les diamines obtenues à partir d'acides gras.

Lorsque la diamine est aliphatique et ramifiée, elle peut comporter un ou plusieurs substituants méthyle ou éthyle sur la chaîne principale. Par exemple, le monomère (diamine en Ca) peut avantageusement être choisi parmi la 2,2,4-trimethyl-1,6-hexanediamine, la 2,4,4-trimethyl-1,6-hexanediamine, le 1,3-diaminopentane, la 2-methyl-1,5-pentanediamine, la 2-methyl-1,8-octanediamine.

Lorsque le monomère (diamine en Ca) est cycloaliphatique, il est choisi parmi la bis(3,5-dialkyl-4-aminocyclohexyl)methane, la bis(3,5-dialkyl-4-aminocyclohexyl)ethane, la bis(3,5-dialkyl-4-aminocyclo-hexyl)propane, la bis(3,5-dialkyl-4-aminocyclo-hexyl)butane, la bis-(3-méthyl-4-aminocyclohexyl)-méthane (BMACM ou MACM), la p-bis(aminocyclohexyl)-methane (PACM) et l'isopropylidenedi(cyclohexylamine) (PACP), l'isophoronediamine (a=10), la pipérazine (a=4), l'amino-éthylpipérazine. Il peut également comporter les squelettes carbonés suivants : norbornyl méthane, cyclohexylméthane, dicyclohexylpropane, di(méthylcyclohexyl), di(methylcyclohexyl) propane. Une liste non-exhaustive de ces diamines cycloaliphatiques est donnée dans la publication "Cycloaliphatic Aminés" (Encyclopaedia of Chemical Technology, Kirk-Othmer, 4th Edition (1992), pp. 386-405).

Lorsque le monomère (diamine en Ca) est alkylaromatique, il est choisi parmi la 1,3-xylylène diamine et la 1,4-xylylène diamine.

Le motif (diacide en Cb) est choisi parmi les diacides aliphatiques, linéaires ou ramifiés, les diacides cycloaliphatiques, les diacides aromatiques.

Lorsque le monomère (diacide en Cb) est aliphatique et linéaire, il est choisi parmi l'acide succinique (b=4), l'acide pentanedioïque (b=5), l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18), l'acide octadécènedioïque (b=18), l'acide eicosanedioïque (b=20), l'acide docosanedioïque (b=22) et les dimères d'acides gras contenant 36 carbones.

Lorsque le diacide est cycloaliphatique, il peut comporter les squelettes carbonés suivants : norbornyl méthane, cyclohexylméthane, dicyclohexylméthane, dicyclohexylpropane, di(méthylcyclohexyl), di(methylcyclohexyl)propane.

Lorsque le diacide est aromatique, il est choisi parmi l'acide téréphtalique (noté T), isophtalique (noté I) et les diacides naphtaléniques.

Lorsque le diacide est un acide gras polymérisé, il est choisi parmi les acides gras polymérisés commercialisés et notamment le produit de dénomination commerciale Pripol® commercialisé par la société Croda ainsi que le produit de dénomination commerciale Empol® commercialisé par la société Cognis ou le produit de dénomination commerciale Unydime® commercialisé par la société Arizona Chemical ou encore le produit de dénomination commerciale Radiacid® commercialisé par la société Oleon.

Après séparation, les dimères d'acide gras sont obtenus majoritairement de 75% à plus de 98%, en mélange avec notamment le monomère, le 1 ½ mère et le trimère correspondant.

Avantageusement, le polyamide semi-cristallin est choisi parmi un polyamide aliphatique, un polyamide cycloaliphatique, un polyamide aromatique ou un mélange de ceux-ci.

Avantageusement, le polyamide présente une Tf comprise de 160°C à 290°C déterminée selon la norme ISO

11357-3 (2013).

Comme indiqué précédemment, l'expression "polyamides semi-cristallins" couvre également les copolyamides, qui résultent de la condensation d'au moins deux des groupes de composés énoncés ci-dessus pour l'obtention d'homopolyamides.

Parmi les copolyamides, on peut notamment citer le copolyamide 11/10.T et le copolyamide 12/10.T.

Les copolyamides de l'invention couvrent également des copolyamides semi-cristallin comprenant au moins un motif minoritaire issu de la polycondensation :

- d'au moins une diamine avec au moins un acide gras polymérisé, en particulier un dimère d'acide gras, ou
- d'un dimère diamine avec au moins un acide dicarboxylique, ou
- d'un dimère aminoacide,

en particulier issu de la polycondensation :

- d'au moins une diamine avec au moins un acide gras polymérisé, en particulier un dimère d'acide gras, ou
- d'un dimère diamine avec au moins un acide dicarboxylique,

ou leur mélanges.

Plus spécifiquement, ledit motif minoritaire comprenant au moins l'une des formules suivantes :

- soit les restes d'un dimère d'acide gras de formule (I) suivante:

$$HO_2C\text{-}(CH_2)_n\text{-}\bigcirc\text{-}(CH_2)_p\text{-}CO_2H \text{ (I)},$$

- soit les restes d'un dimère diamine de formule (II) suivante :

$$H_2N\text{-}(CH_2)_n\text{-}\bigcirc\text{-}(CH_2)_p\text{-}NH_2 \text{ (II)},$$

- soit les restes d'un amino acide de formule (III) suivante :

$$H_2N\text{-}(CH_2)_n\text{-}\bigcirc\text{-}(CH_2)_p\text{-}CO_2H \text{ (III)},$$

ou un mélange de celles-ci,
dans lesquelles formules, indépendamment l'une de l'autre :

n est compris de 1 à 10, en particulier 1 à 7, notamment 5 à 7
p est compris de 1 à 10, en particulier 1 à 7, notamment 5 à 7
○ correspond à une structure choisie parmi :

- 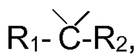,
- 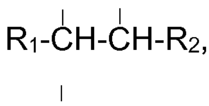,
- $R_1$-CH-$(CH_2)_m$-CH-$R_2$, m étant compris de 1 à 5
$R_1$ et $R_2$ représentant dans lesdites trois structures, indépendamment l'un de l'autre, H ou une chaîne alkyle en $C_1$ à $C_{12}$, en particulier en $C_7$ à $C_{11}$, et

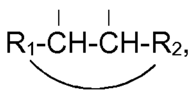,

dans laquelle $R_1$ et $R_2$ sont cyclisés pour former une structure :

i) à un cycle de type cyclohexane :

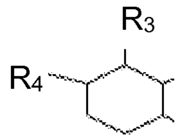

ou phényle :

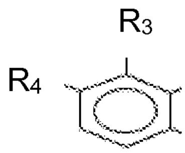

ii) à deux cycles de type 1,2,3,4-tétrahydronaphtalène :

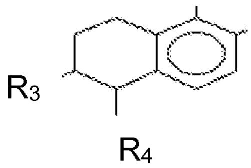

ou de type bicyclo[4.4.0]décane :

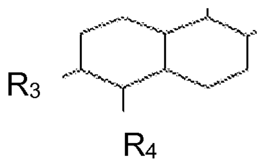

$R_3$ et $R_4$ étant dans les structures à un ou deux cycles ci-dessus définis
des résidus alkyles en C1 à C10, en particulier C7 à C9,
ou un mélange de celles-ci,
le nombre total d'atomes de carbone dans le diacide de formule (I), la diamine de formule (II) et l'aminoacide de formule (III) étant supérieur ou égale à 30, en particulier supérieur ou égal à 36, en particulier 36.

Avantageusement, la proportion molaire dudit au moins motif minoritaire dans le copolyamide semi-cristallin est de 1 à 20%, en particulier de 1 à 10%, notamment de 2 à 10% par rapport à la somme de tous les motifs dudit copolyamide.

Le polyamide semi-cristallin, qu'il soit un homopolyamide aliphatique, cycloaliphatique ou aromatique, ou encore un copolyamide, présente un nombre d'atomes de carbone par atome d'azote supérieur à 7,5, avantageusement compris entre 9 et 18 et préférentiellement entre 10 et 18.

Dans le cas d'un homopolyamide de type PA-X.Y, le nombre d'atomes de carbone par atome d'azote est la moyenne du motif X et du motif Y.

Dans le cas d'un copolyamide, le nombre de carbone par azote se calcule selon le même principe. Le calcul est réalisé au prorata molaire des différents motifs amides.

La composition mise en œuvre dans le cadre de la présente invention comprend au moins un polyamide semi-cristallin, c'est-à-dire qu'elle peut comprendre un mélange de deux ou plusieurs des polyamides semi-cristallins parmi les polyamides cristallins répondant à la définition indiquée ci-dessus.

En particulier, on peut avantageusement envisager l'utilisation d'une composition comprenant du copolyamide 11/10.T et/ou du copolyamide 12/10.T, en mélange avec du PA11 et/ou du PA12.

Le polyamide mis en œuvre dans le cadre de la présente invention peut notamment présenter une masse

moléculaire moyenne en nombre $\overline{Mn}$ en général supérieure ou égale à 20000 et avantageusement comprise entre 20000 et 80000. Sa masse moléculaire moyenne en poids $\overline{Mw}$ est en général supérieure à 40000 et avantageusement comprise entre 50000 et 100000 ; elle peut aller jusqu'à 200000. Sa viscosité inhérente (mesurée à 20°C pour un échantillon de $5.10^{-3}$ g/cm$^3$ de métacrésol) est en général supérieure à 0,7, de préférence supérieure à 1,2.

*La polyoléfine*

On entend par polyoléfine, un polymère comprenant des motifs oléfines tels que, par exemple, des motifs éthylène, propylène, butylène, octène ou tout autre alpha oléfine.

A titre d'exemple, on peut citer :

- les polyéthylènes tels que les LDPE, HDPE, LLDPE ou VLDPE, le polypropylène ou encore les polyéthylènes métallocènes ;
- les copolymères de l'éthylène tels que les copolymères éthylène/propylène, les copolymères éthylène/butylène, les copolymères éthylène/héxène, les copolymères éthylène/octène, et les terpolymères éthylène/propylène/diène ; et
- les copolymères de l'éthylène avec au moins un produit choisi parmi les sels ou esters d'acides carboxyliques insaturés et les esters vinyliques d'acides carboxyliques saturés.

Dans une version particulièrement avantageuse de l'invention, la polyoléfine est un copolymère élastomère de l'éthylène.

Un tel copolymère élastomère d'éthylène est un composé obtenu à partir d'au moins deux monomères distincts dont au moins un monomère d'éthylène.

De préférence, ce copolymère élastomère d'éthylène est choisi parmi un copolymère éthylène/propylène (EPR), un copolymère éthylène/butylène, un copolymère éthylène/héxène, un copolymère éthylène/octène et un copolymère éthylène/(méth)acrylate d'alkyle.

Le copolymère éthylène/propylène (EPR) est un copolymère élastomère bien connu, obtenu à partir de monomères d'éthylène et de propylène. L'EPR ou EPM, est notamment décrit dans l'ouvrage Ullmann's Encyclopedia of Industrial Chemistry, 5e édition, Vol A 23, des pages 282 à 288, le contenu étant incorporé dans la présente demande.

Le copolymère éthylène/butylène est obtenu à partir de monomères d'éthylène et de butène-1.

Le copolymère éthylène/(méth)acrylate d'alkyle est obtenu par polymérisation radicalaire de l'éthylène et de (méth)acrylate d'alkyle. Le méth(acrylate) d'alkyle est de préférence choisi parmi le (méth)acrylate de méthyle, l'acrylate d'éthyle, l'acrylate de n-butyle, l'acrylate d'isobutyle, l'acrylate d'octyle et l'acrylate de 2-éthylhexyle.

La polyoléfine utilisée dans le cadre de la présente invention est fonctionnalisée dans le sens où elle comprend au moins une fonction époxy, anhydride ou acide, cette fonction étant introduite par greffage ou par copolymérisation.

La polyoléfine fonctionnalisée peut notamment être choisie parmi les copolymères éthylène/alpha oléfines, fonctionnalisés et les copolymères éthylène/(méth)acrylate d'alkyle fonctionnalisés.

La polyoléfine fonctionnalisée peut également être choisie parmi :

- les copolymères de l'éthylène, d'un époxyde insaturé et éventuellement d'un ester ou un sel d'acide carboxylique insaturé ou d'un ester vinylique d'acide carboxylique saturé. Ce sont, par exemple, les copolymères éthylène/acétate de vinyle/(méth)acrylate de glycidyle ou les copolymères éthylène/(méth)acrylate d'alkyle/(méth)acrylate de glycidyle,
- les copolymères de l'éthylène, d'un anhydride d'acide carboxylique insaturé et/ou d'un acide carboxylique insaturé pouvant être partiellement neutralisé par un métal (Zn) ou un alcalin (Li) et éventuellement d'un ester d'acide carboxylique insaturé ou d'un ester vinylique d'acide carboxylique saturé. Ce sont, par exemple, les copolymères éthylène/acétate de vinyle/anhydride maléique, les copolymères éthylène/(méth)acrylate d'alkyle/anhydride maléique ou encore les copolymères éthylène/(méth)acrylate de Zn ou Li/anhydride maléique.

La densité de la polyoléfine fonctionnalisée peut avantageusement être comprise entre 0,86 et 0,965.

De manière avantageuse, la polyoléfine est fonctionnalisée par un anhydride d'acide carboxylique.

Plus préférentiellement, la polyoléfine fonctionnelle est choisie parmi un copolymère éthylène/propylène (EPR) greffé anhydride maléique, un copolymère éthylène/hexène greffé anhydride maléique, un copolymère éthylène/octène greffé anhydride maléique, un copolymère éthylène/butylène greffé anhydride maléique et un copolymère éthylène/(méth)acrylate d'alkyle comprenant une fonction anhydride maléique.

A titre d'exemple de copolymère éthylène/(méth)acrylate d'alkyle comprenant une fonction anhydride maléique, on peut citer les terpolymères de l'éthylène, d'acrylate d'alkyle et d'anhydride maléique, notamment commercialisés par la Demanderesse sous la dénomination commerciale Lotader®.

*Le plastifiant*

Le plastifiant est choisi parmi les dérivés de benzène sulfonamide, tels que le n-butyl benzène sulfonamide (BBSA) ; l'éthyl toluène sulfonamide ou le N-cyclohexyl toluène sulfonamide ; les esters d'acides hydroxy-benzoïques, tels que le parahydroxybenzoate d'éthyl-2-hexyle et le parahydroxybenzoate de décyl-2-hexyle ; les esters ou éthers du tétrahydrofurfuryl alcool, comme l'oligoéthylèneoxytétrahydrofurfurylalcool ; et les esters de l'acide citrique ou de l'acide hydroxy-malonique, tel que l'oligoéthylèneoxy malonate.
On ne sortirait pas du cadre de l'invention en utilisant un mélange de plastifiants.
Le plastifiant particulièrement préféré est le n-butyl benzène sulfonamide (BBSA).
Le plastifiant peut être introduit dans le polyamide pendant la polycondensation ou ultérieurement.

*Le stabilisant à base de complexe de cuivre*

L'expression complexe de cuivre désigne notamment un complexe entre un sel monovalent ou divalent de cuivre avec un acide organique ou inorganique et un ligand organique.
Avantageusement, le sel de cuivre est choisi parmi les sels cuivriques (Cu(II)) d'halogénure d'hydrogène, les sels cuivreux (Cu(I)) d'halogénure d'hydrogène et les sels d'acides carboxyliques aliphatiques.
En particulier, les sels de cuivre sont choisis parmi CuCl, CuBr, CuI, CuCN, $CuCl_2$, $Cu(OAc)_2$, le stéarate cuivrique.
Des complexes de cuivre sont notamment décrits dans US3505285.
La composition de l'invention est dépourvue d'halogénures de métal alcalin tels que des halogénures de lithium, de sodium, de potassium, de rubidium, de césium ou de francium.
Par conséquent, un antioxydant tel que CuI/Ki est exclu de l'invention.

*Le catalyseur* :

Le terme « catalyseur » désigne un catalyseur de polycondensation tel qu'un acide minéral ou organique.
Avantageusement, la proportion en poids de catalyseur est comprise d'environ 50 ppm à environ 5000 ppm, en particulier d'environ 100 à environ 3000 ppm par rapport au poids total de la composition.
Avantageusement, la quantité de catalyseur représente jusqu'à 3000 ppm, et de préférence entre 50 et 1000 ppm, par rapport à la quantité de polyamide.
Avantageusement, le catalyseur est choisi parmi l'acide phosphorique ($H_3PO_4$), l'acide phosphoreux ($H_3PO_3$), l'acide hypophosphoreux ($H_3PO_2$), ou un mélange de ceux-ci.
Avantageusement, la présente invention concerne donc l'utilisation ci-dessus définie d'au moins un catalyseur, en proportion en poids de catalyseur comprise d'environ 50 ppm à environ 5000 ppm, en particulier d'environ 100 à environ 3000 ppm par rapport au poids total de la composition, d'au moins un stabilisant thermique au cuivre avec une matrice comprenant au moins un polyamide semi-cristallin, ledit catalyseur étant choisi parmi l'acide phosphorique ($H_3PO_4$), l'acide phosphoreux ($H_3PO_3$), l'acide hypophosphoreux ($H_3PO_2$), ou un mélange de ceux-ci.
Avantageusement, le catalyseur est choisi parmi l'acide phosphorique ($H_3PO_4$), l'acide phosphoreux ($H_3PO_3$) dans une proportion comprise d'environ 100 à environ 3000 ppm.
La composition de l'invention est utilisée comme couche d'étanchéité dans un tuyau contenant du pétrole ou du gaz, ce tuyau étant utilisé dans l'exploitation des gisements de pétrole ou de gaz sous la mer (offshore).
Ces tuyaux servent d'une part pour assurer les connexions entre le fond sous-marin où se situe la tête de puits et la surface ou se trouve la plateforme pétrolière qui assure le traitement et l'expédition de la production mais aussi, pour véhiculer l'effluent produit par des puits, sous forme de produits liquides ou gazeux, entre un site de stockage ou de traitement et le lieu d'utilisation.
Ces tuyaux transportent donc la production pétrolière et tous les produits qui peuvent y être associés (pétrole brute liquide et/ou gaz, sous pression et en température, ainsi que d'autre fluides divers tels que l'eau, le méthanol... provenant du puits).
Par conséquent, le terme gaz désigne un gaz combustible issu du puits de pétrole et ne concerne en aucune manière de l'air ou un mélange avec de l'air.
Le tuyau de l'invention n'est ni un tuyau pneumatique transportant de l'air ni un tuyau hydraulique transportant de l'huile notamment minérale.
Le tuyau de l'invention est utilisé dans l'exploitation des gisements de pétrole ou de gaz sous la mer (offshore) et ne concerne donc pas non plus les tuyaux on-shore.
Les compositions avec catalyseur comprenant les constituants du tableau 1 ci-après sont donc explicitement divulguées dans la présente invention :

| | PAsc (%) | Polyoléfine (%) | Plastifiant (%) | Stabilisant (%) |
|---|---|---|---|---|
| Compo 1 | 70-91 | 5-25 | 3-20 | 0,05-5 |
| Compo 2 | 70-91 | 5-25 | 3-20 | 0,05-1 |
| Compo 3 | 70-91 | 5-25 | 3-20 | 0,1-1 |
| Compo 4 | 70-91 | 8-15 | 3-20 | 0,05-5 |
| Compo 5 | 70-91 | 8-15 | 3-20 | 0,05-1 |
| Compo 6 | 70-91 | 8-15 | 3-20 | 0,1-1 |
| Compo 7 | 70-91 | 8-12 | 3-20 | 0,05-5 |
| Compo 8 | 70-91 | 8-12 | 3-20 | 0,05-1 |
| Compo 9 | 70-91 | 8-12 | 3-20 | 0,1-1 |
| Compo 10 | 70-91 | 5-25 | 4-12 | 0,05-5 |
| Compo 11 | 70-91 | 5-25 | 4-12 | 0,05-1 |
| Compo 12 | 70-91 | 5-25 | 4-12 | 0,1-1 |
| Compo 13 | 70-91 | 8-15 | 4-12 | 0,05-5 |
| Compo 14 | 70-91 | 8-15 | 4-12 | 0,05-1 |
| Compo 15 | 70-91 | 8-15 | 4-12 | 0,1-1 |
| Compo 16 | 70-91 | 8-12 | 4-12 | 0,05-5 |
| Compo 17 | 70-91 | 8-12 | 4-12 | 0,05-1 |
| Compo 18 | 70-91 | 8-12 | 4-12 | 0,1-1 |
| Compo 19 | 75-87 | 5-25 | 3-20 | 0,05-5 |
| Compo 20 | 75-87 | 5-25 | 3-20 | 0,05-1 |
| Compo 21 | 75-87 | 5-25 | 3-20 | 0,1-1 |
| Compo 22 | 75-87 | 8-15 | 3-20 | 0,05-5 |
| Compo 23 | 75-87 | 8-15 | 3-20 | 0,05-1 |
| Compo 24 | 75-87 | 8-15 | 3-20 | 0,1-1 |
| Compo 25 | 75-87 | 8-12 | 3-20 | 0,05-5 |
| Compo 26 | 75-87 | 8-12 | 3-20 | 0,05-1 |
| Compo 27 | 75-87 | 8-12 | 3-20 | 0,1-1 |
| Compo 28 | 75-87 | 5-25 | 4-12 | 0,05-5 |
| Compo 29 | 75-87 | 5-25 | 4-12 | 0,05-1 |
| Compo 30 | 75-87 | 5-25 | 4-12 | 0,1-1 |
| Compo 31 | 75-87 | 8-15 | 4-12 | 0,05-5 |
| Compo 32 | 75-87 | 8-15 | 4-12 | 0,05-1 |
| Compo 33 | 75-87 | 8-15 | 4-12 | 0,1-1 |
| Compo 34 | 75-87 | 8-12 | 4-12 | 0,05-5 |
| Compo 35 | 75-87 | 8-12 | 4-12 | 0,05-1 |
| Compo 36 | 75-87 | 8-12 | 4-12 | 0,1-1 |

Dans un mode de réalisation avantageux, le dit tuyau est flexible.

Dans un mode de réalisation avantageux, la présente invention concerne l'utilisation d'une composition telle

que définie ci-dessus, caractérisée en ce que ledit complexe à base de cuivre comprend un ligand choisi parmi les phosphines, en particulier les triphenylphosphines, le mercaptobenzimidazole, l'EDTA, l'acétylacétonate, la glycine, l'éthylène diamine, l'oxalate, la diéthylène diamine, la triéthylène tetraamine, la pyridine, la diphosphone et le dipyridyl ou leurs mélanges, en particulier la triphénylphosphine et/ou le mercaptobenzimidazole.

Les phosphines désignent les alkylphosphines, telle que la tributylphosphine ou les arylphosphines telle que la triphénylphosphine (TPP).

Avantageusement, ledit ligand est la triphénylphosphine.

Des exemples de complexes ainsi que leur préparation sont décrits dans le brevet CA 02347258.

Avantageusement, la quantité de cuivre dans la composition de l'invention est comprise de 10 ppm à 1000 ppm en poids, notamment de 20 ppm à 70 ppm, en particulier de 50 à 150 ppm par rapport au poids total de la composition.

Dans un mode de réalisation avantageux, la présente invention concerne l'utilisation d'une composition telle que définie ci-dessus, caractérisée en ce que ledit complexe à base de cuivre comprend de plus un composé organique halogéné.

Le composé organique halogéné peut être tout composé organique halogéné.

Avantageusement, ledit composé organique halogéné est un composé à base de brome et/ou un composé aromatique.

Avantageusement, ledit composé aromatique est notamment choisi parmi le decabromediphenyl, decabromodiphenyl ether, les oligomères de bromo ou chloro styrène, le polydibromestyrene, le tetrabromobisphenyl-A, les dérivés de tetrabisphenyl-A, tels que les dérivés epoxy, et les dérivés de chloro dimethanedibenzo(a,e)cyclooctène et leurs mélanges.

Avantageusement, ledit composé organique halogéné est un composé à base de brome.

Ledit composé organique halogéné est ajouté à la composition en une proportion de 50 à 30 000 ppm en poids d'halogène par rapport au poids total de la composition, notamment de 100 à 10000 en particulier de 500 à 1500 ppm.

Avantageusement, le ratio molaire cuivre:halogène est compris de 1 :1 à 1 :3000, notamment de 1 :2 à 1 :100.

En particulier, ledit ratio est compris de 1 :1,5 à 1:15.

Avantageusement, le stabilisant à base de complexe de cuivre est choisi parmi un Bruggolen® H3386, un Bruggolen® H3376, un Bruggolen® H3344, un Bruggolen® H3350, en particulier un Bruggolen® H3386.

La composition de l'invention peut être préparée par mélange de tous les composés puis chauffage jusqu'à la fusion du polyamide.

Avantageusement, le polyamide est préalablement chauffé jusqu'à sa fusion puis les autres constituants de la composition, notamment le stabilisant à base de complexe de cuivre sont ajoutés.

Avantageusement, lorsque le stabilisant à base de cuivre comprend un composé organique halogéné, il est alors additionné sous forme d'un mélange maître dans des proportions suffisantes pour obtenir la composition de l'invention.

Les inventeurs ont par ailleurs trouvé que lorsqu'une stabilisation classique de type CuI/Ki est utilisée, c'est-à-dire avec un halogénure de métal alcalin, la remontée en viscosité à l'état fondu est inhibée conduisant à un produit qui n'est pas extrudable sans souci de fluage sous leur propre poids dans le cas de tubes de fort diamètre. Il est nécessaire d'utiliser un allongeur de chaîne tel qu'un carbodiimide pour obtenir la remontée en viscosité et disposer d'une composition extrudable. Néanmoins, dans le cas de l'utilisation d'un antixoxydant à base de complexe de cuivre, c'est-à-dire en l'absence d'halogénure de métal alcalin, les Inventeurs ont trouvé que la présence d'un allongeur de chaîne telle qu'un carbodiimide n'est pas indispensable et la remontée en viscosité à l'état fondu est observée même en l'absence d'oligo- ou poly-carbodiimide.

Avantageusement, la présente invention concerne l'utilisation d'une composition telle que ci-dessus définie, caractérisée en ce que ladite composition comprend en outre au moins un additif choisi parmi les modifiants chocs, les colorants, les pigments, les azurants et les stabilisants UV.

Lesdits modifiants chocs ne répondent de préférence pas à la définition des polyoléfines fonctionnelles décrites ci-dessus.

Ces produits sont connus en eux-mêmes et utilisés habituellement dans les compositions à base de polyamide.

Parmi les modifiants chocs, on peut notamment citer les charges, minérales ou organiques, les caoutchoucs et les composés cœur-écorce ou "core-shell" tels que décrits dans le document "Plastics Additives : An A-Z Reference, published in 1998 by Chapman & Hall, London ; Impacts modifiers : (2) Modifiers for engineering thermoplastics, C.A. Cruz, Jr" ou le document "Antec, 2002 Plastics : Annual Technical Conference, volume 3 : Specila Areas - Additives and Modifiers-, Novel Acrylic, weatherable impact modifiers with excellent low temperature impact performance, Claude Granel & Michael Tran" . Comme composés cœur-écorce utilisable, on peut citer, ceux à cœur élastomérique en polymère réticulé à base d'acrylate de butyle et à écorce dure en poly(méthacrylate de méthyle).

Il faut noter que lorsque un stabilisant UV tel qu'un HALS (Hindered Aminic Light Stabilizer) est utilisé, ce dernier ne peut rentrer dans la définition du stabilisant de l'invention.

La quantité de ces additifs peut représenter jusqu'à 5 % en poids, et avantageusement entre 0,5 et 2 % en

poids, du poids total de la composition selon l'invention.

*COMPOSITION*

Selon un autre aspect, la présente invention concerne une composition comprenant :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'au moins une polyoléfine comprenant une fonction époxy, anhydride ou acide, introduite par greffage ou par copolymérisation, la polyoléfine étant avantageusement un copolymère élastomère de l'éthylène, qui est de préférence choisi parmi un copolymère éthylène/propylène (EPR), un copolymère éthylène/butylène, un copolymère éthylène/hexène, un copolymère éthylène/octène et un copolymère éthylène/(méth)acrylate d'alkyle, et
- de 3 à 20 % en poids, de préférence de 5 à 13 % en poids, d'au moins un plastifiant
- de 0,05 à 2% en poids, de préférence de 0,1 à 1% en poids d'au moins un stabilisant à base de complexe de cuivre,
- d'au moins un catalyseur,

ladite composition étant dépourvue d'halogénure de métal alcalin et d'oligo- ou poly-carbodiimide.

Cette composition est utilisée pour la fabrication de tuyaux, en particulier flexibles, utilisés dans l'exploitation des gisements de pétrole ou de gaz sous la mer (offshore).

Toutes les caractéristiques définies ci-dessus dans le paragraphe « utilisation » sont valables pour la composition en tant que telle.

Selon un autre aspect, la présente invention concerne un procédé de préparation d'une composition telle que définie ci-dessus, comprenant la mise en contact :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'une polyoléfine comprenant une fonction époxy, anhydride ou acide, introduite par greffage ou par copolymérisation, la polyoléfine étant avantageusement un copolymère élastomère de l'éthylène, qui est de préférence choisi parmi un copolymère éthylène/propylène (EPR), un copolymère éthylène/butylène, un copolymère éthylène/hexène, un copolymère éthylène/octène et un copolymère éthylène/(méth)acrylate d'alkyle, et
- de 3 à 20 % en poids, de préférence de 5 à 13 % en poids, d'un plastifiant
- de 0,05 à 2% en poids, de préférence de 0,1 à 1% en poids d'un stabilisant à base de complexe de cuivre,
- d'au moins un catalyseur,

ladite composition étant dépourvue d'halogénure de métal alcalin et d'oligo- ou poly-carbodiimide.

La composition utilisée dans le cadre de la présente invention est préparée par mélange, à l'état fondu, des différents constituants dans tout dispositif de mélange, et de préférence une extrudeuse.

La composition est le plus souvent récupérée sous forme de granulés.

De la même manière, toutes les caractéristiques définies ci-dessus dans le paragraphe « Utilisation » sont valables pour le procédé de préparation de la composition.

Selon encore un autre aspect, la présente invention concerne un tuyau destiné à être utilisé pour l'exploitation des gisements de pétrole ou de gaz sous la mer (offshore) comprenant au moins une couche (1) obtenue à partir d'une composition comprenant :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'au moins une polyoléfine comprenant une fonction époxy, anhydride ou acide, introduite par greffage ou par copolymérisation, la polyoléfine étant avantageusement un copolymère élastomère de l'éthylène, qui est de préférence choisi parmi un copolymère éthylène/propylène (EPR), un copolymère éthylène/hexène, un copolymère éthylène/octène, un copolymère éthylène/butylène et un copolymère éthylène/(méth)acrylate d'alkyle, et
- de 3 à 20 % en poids, de préférence de 5 à 13 % en poids, d'au moins un plastifiant
- de 0,05 à 2% en poids, de préférence de 0,1 à 1% en poids d'un stabilisant à base de complexe de cuivre,

- d'au moins un catalyseur,

ladite composition étant dépourvue d'halogénure de métal alcalin et d'oligo- ou poly-carbodiimide.

De la même manière, toutes les caractéristiques définies ci-dessus dans le paragraphe « Utilisation » sont valables pour la couche (1) à base de la composition de l'invention.

Dans un mode de réalisation avantageux, la présente invention concerne tuyau, tel que défini ci-dessus, caractérisé en ce que le polyamide semi-cristallin est choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone, les copolyamides 11/12 ayant soit plus de 90 % de motifs 11 soit plus de 90 % de motifs 12 et les polyphtalamides et les polyamides comprenant au moins un motif minoritaire issu de la polycondensation d'une diamine avec un acide gras polymérisé, en particulier un dimère d'acide gras.

Avantageusement, ledit tuyau défini ci-dessus, est caractérisé en ce qu'il comprend en outre au moins une deuxième couche (2) constituée d'un ou plusieurs éléments métalliques, la deuxième couche (2) étant en contact avec le pétrole ou le gaz véhiculé, la couche (1) étant disposée autour de la deuxième couche (2) de manière à assurer l'étanchéité.

La couche (2) peut notamment être un tube métallique flexible, appelé carcasse interne, constitué par au moins un profilé dont les spires sont agrafées les unes aux autres.

Avantageusement, la présente invention concerne un tuyau, tel que défini ci-dessus, caractérisé en ce qu'il comprend en outre au moins une troisième couche (3) en métal ou en matériau composite, la troisième couche (3) étant disposée autour de la couche (1) de manière à compenser la pression interne du pétrole ou du gaz véhiculé.

Avantageusement, ledit tuyau est flexible.

L'expression « matériau composite » signifie que ladite couche (3) est constituée d'au moins un polyamide, identique ou différent de celui de la couche (1) comprenant de plus des fibres continues choisies parmi :

- les fibres minérales, en particulier des fibres de verre,
- les fibres de carbone et les nanotubes de carbone
- les fibres polymériques ou de polymère,
- ou les mélanges des fibres précitées.

Avantageusement, lesdites fibres sont des fibres de verre ou des fibres de carbone, notamment des fibres de verre.

Avantageusement, la proportion de fibres continues est de 30 à 80% par rapport au poids total de la composition.

Avantageusement, la présente invention concerne un tuyau flexible tel que défini ci-dessus, caractérisé en ce qu'il comprend en outre au moins une quatrième couche (4) de protection disposée autour de la couche (1) ou, le cas échéant, de la troisième couche (3).

La couche de protection peut être une nappe de fibres métalliques ou des caoutchoucs.

La présente invention va maintenant être illustrée par des exemples de différentes compositions dont l'utilisation fait l'objet de la présente invention ainsi que par différentes structures de tuyaux flexibles, également conformes à l'objet de la présente invention.

## DESCRIPTION DES FIGURES

La figure 1 présente l'évolution de la Force normale sur les compositions I1 ou I4 de l'invention versus la composition comparative C3 (Essai sur micro-extrudeuse de marque DSM (de volume 15mL) à vis coniques co-rotatives à 270°c durant 25 mn).

La figure 2 présente la comparaison de l'hydrolyse à 140°C, pH4 (bandes de Yvroud 6mm d'épaisseur) entre les compositions C2 et I3 et I4.

## EXEMPLES :

### Produits utilisés

Les polyamides utilisés sont le PA11 de Mn (masse moléculaire en nombre) 22000, de viscosité inhérente 1.45, de température de fusion 190°C, et contenant 600ppm d'acide phosphorique).

La mesure de la viscosité intrinsèque ou inhérente est réalisée dans le m-crésol. La méthode est bien connue de l'homme du métier. On suit la norme ISO 307 :2007 mais en changeant le solvant (utilisation du m-crésol à la place

de l'acide sulfurique, la température (20°C), et la concentration (0.5% massique).

La Mn est déterminée à partir de la titration (dosage) des fonctions terminales selon une méthode potentiométrique (dosage direct pour NH2 ou carboxy).

Le stabilisant thermique à base de cuivre de l'exemple comparatif est du PolyAdd P201 de la société Polyad Services (iodine 201) (CuI/KI).

Stabilisant à base de complexe de cuivre : Bruggolen H3386

Le catalyseur utilisé est $H_3PO3$ ou $H_3PO_4$.

ANOX® NDB TL89 : stabilisant organique type phénol phosphite commercialisé par la société Chemtura.

BBSA : n-butyl benzène sulfonamide commercialisé par la société PROVIRON EXXELOR VA 1801 : polyoléfine (copolymère d'éthylène fonctionnalisé anhydride maléique) commercialisé par la société Exxon.

Préparation des compositions

Les produits sont compoundés en extrudeuse bi-vis co-rotative de type WERNER® 40 bi-vis (L/D = 40). Cette extrudeuse comprend 10 zones numérotées de F1 à F9 et la filière. La zone d'alimentation F1 n'est pas chauffée et on adopte un profil de températures plat à 270°C pour l'ensemble des autres zones.

Le polyamide, le copolymère élastomère et le stabilisant sont introduits en zone F1 sous forme d'un mélange à sec (dry-blend).

Le plastifiant (BBSA) est introduit par une pompe doseuse en zone F6-7. Le dégazage sous vide relatif de 360 mm Hg est effectué en zone F4.

Le débit d'extrusion en sortie de la filière est de 60 kg/h pour une vitesse de rotation des vis de 300 rpm (tours par minute). Le jonc est granulé après refroidissement dans un bac à eau. Les granulés des différents essais sont alors séchés à 80°C durant 12 heures et conditionnés en sacs étanches après vérification des taux d'humidités (% eau inférieur ou égal à 0,08 %).

Dans le tableau I ci-après, sont rassemblées les informations relatives aux différents composés et leur pourcentage pondéral respectif dans les compositions des essais 1 à 4 (C1, C2 et C3 : comparatifs et I1 à I4 : invention), ainsi qu'à certains paramètres relevés lors de l'extrusion (températures T en tête, pressions P en tête, couple). Le vide est régulé de manière à ce que la pression en tête soit constante d'un essai à l'autre et 34 bars.

TABLEAU I

| | Références | C1 | C2 | I1 invention | I2 invention | I3 invention | I4 invention | C3 |
|---|---|---|---|---|---|---|---|---|
| compositions | PA11 | 86,8 | 82,8 | 83,3 | 83,5 | 83,75 | 83,8 | 83,8 |
| | BBSA | 12 | 6 | 6 | 6 | 6 | 6 | 6 |
| | Stabilisant Bruggolen H3386 | - | - | 0,7 | 0,5 | 0,25 | 0,2 | |
| | Antioxydant CuI/KI | - | - | - | - | - | - | 0,2 |
| | Antioxydant ANOX® NDB TL89 | 1,2 | 1,2 | - | - | - | - | - |
| | Polyoléfine EXXELOR VA 1801 | - | 10 | 10 | 10 | 10 | 10 | 10 |
| | | | | | | | | |
| | Vitesse Trs/mn | | | 300TR/MN | | | | |
| | Débit Kg/h | | | 60 | | | | |
| | Extrudeuse | | | Werner 40 | | | | |
| | Vide mm/hg | | | -700 | | | | |
| | CONSIGNE T°C DES FOURREAUX | | | 280°C | | | | |
| RELEVER DE MARCHE | T°C Matière 1 =F3/F4 | | | 261 | | | | |
| | T°C Matière 2 =F5/F6 | | | 277 | | | | |
| | T°C Matière 3critique=F7/F8 | | | 281 | | | | |
| | T°C matière tête 4=tête | | | 289 | | | | |
| | Pression tête (bars). | | | 34 | | | | |
| | Couple %. | | | 73 | | | | |
| | Pr. Axiale ( bars) | | | 32 | | | | |

Le tableau III présente les résultats obtenus sur la remontée en viscosité, la tenue à l'hydrolyse (Haltères ASTM D638 type IV) et la stabilité thermique (Éprouvettes ISO 527-2 1BA 1/2 vie à 140°C) pour les différentes compositions.

1) Protocole du test d'hydrolyse

Les éprouvettes, ASTM D638 type IV sont découpées à l'emporte-pièce dans les bandes extrudées (YVROUD) de 6mm d'épaisseur et placées dans des autoclaves en aciers.
Remplissage d'eau Volvic, fermeture étanche et barbotage d'azote pendant au moins 3 heures et demi.
Mise sous pression CO2 à 24 bars pour obtenir pH4.
Installation des autoclaves dans une étuve à 140°C.
Prélèvement des éprouvettes selon le plan prévu.
A chaque prélèvement, il y a renouvellement de l'eau Volvic, inertage et mise sous pression.
5 éprouvettes sont prélevées et soumises à un essai de traction à une vitesse de 50mm/min. L'allongement est mesuré par un extensomètre. La moyenne de l'allongement à la rupture ainsi déterminé est reportée en fonction du temps de vieillissement.

2) Remontée en viscosité :

La viscosité à l'état fondu est déterminée par rhéologie oscillatoire à 270°C à 10 rad/sec sous balayage d'azote avec 5% de déformation et un cisaillement de 10 $sec^{-1}$ sur un appareil Physica MCR301 entre deux plans parallèles de 25 mm de diamètre est présentée dans le tableau II suivant.

TABLEAU II

| Références | C1 | C2 | I1 invention | I2 invention | I3 invention | I4 invention | C3 |
|---|---|---|---|---|---|---|---|
| Plan plan 30 mn 270°c Après 30 mn Pa.s | 40000 | 33000 | | 25000 | | | 8000 |

TABLEAU III

| | C1 | C2 | I2 | C3 |
|---|---|---|---|---|
| Remontée en viscosité | ++ | ++ | ++ | - |
| Tenue à l'hydrolyse 140°C eau Volvic pH4 Temps pour avoir 50% absolu d'allongement à la rupture | - | + | ++ | ++ |
| Stabilité à la thermo oxydation à 140°C ½ vie | - | - | ++ | ++ |

Tenue à l'hydrolyse :

« - » signifie que le temps nécessaire pour atteindre 50% absolu d'allongement à la rupture est < 300 h
« + » signifie que le temps nécessaire pour atteindre 50% absolu d'allongement à la rupture est > 300 h et < 800 h
« ++ » signifie que le temps nécessaire pour atteindre 50% absolu d'allongement à la rupture est > 800 h

Stabilité thermique à 140°C

« - » signifie que la ½ vie est < 300 h
« + » signifie que la ½ vie est > 300 h et < 800 h
« ++ » signifie que la ½ vie est > 800 h

Remontée en viscosité

« - » signifie que la valeur obtenue est insuffisante pour l'extrusion
« + » signifie que la valeur est limite pour l'extrusion
« ++ » signifie que la valeur obtenue est bonne pour l'extrusion

Le TABLEAU III montre que l'utilisation d'un stabilisant à base d'un complexe de cuivre permet d'avoir la formulation qui présente les meilleurs résultats par rapport à un stabilisant thermique au cuivre classique (C3) ou un stabilisant organique type phénol phosphite (C2), qu'il s'agisse de la transformation, de la tenue à l'hydrolyse et de la tenue thermique.

Les viscosités inhérentes des différentes compositions ont été déterminées selon la norme ISO 307 :2007 modifiée telle que ci-dessus et sont présentées dans le tableau IV suivant :

TABLEAU IV

| Références | C1 | C2 | I1 invention | I2 invention | I3 invention | I4 invention | C3 |
|---|---|---|---|---|---|---|---|
| Viscosité inhérente brute métacrésol | 1.61 | 1.53 | | 1.60 | | | 1.29 |
| Viscosité inhérente corrigée métacrésol | 1.83 | 1.82 | | 1.90 | | | 1.53 |

Viscosité corrigée = viscosité brute x 100 / (100 - %polyoléfine - %plastifiant)

## Revendications

1. Utilisation d'une composition comprenant :

   - de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
   - de 5 à 25 % en poids, avantageusement de 8 à 15%, de préférence de 8 à 12 % en poids, d'au moins une polyoléfine comprenant une fonction époxy, anhydride ou acide, introduite par greffage ou par copolymérisation, et
   - de 3 à 20 % en poids, de préférence de 4 à 12 % en poids, d'au moins un plastifiant,
   - de 0,05 à 5% en poids, de préférence de 0,05 à 1% en poids de préférence de 0,1 à 1% en poids d'au moins un stabilisant à base de complexe de cuivre,
   - d'au moins un catalyseur,

   ladite composition étant dépourvue d'halogénure de métal alcalin et d'oligo- ou poly-carbodiimide,
   comme couche d'étanchéité dans un tuyau contenant du pétrole ou du gaz, ce tuyau étant utilisé dans l'exploitation des gisements de pétrole ou de gaz sous la mer (offshore).

2. Utilisation selon la revendication 1, **caractérisée en ce que** ledit tuyau est flexible.

3. Utilisation selon la revendication 1 ou 2, **caractérisée en ce que** ledit complexe à base de cuivre comprend un ligand choisi parmi les phosphines, en particulier les triphenylphosphines, le mercaptobenzimidazole, l'EDTA, l'acétylacétonate, la glycine, l'éthylène diamine, l'oxalate, la diéthylène diamine, la triéthylène tetraamine, la pyridine, la diphosphone et le dipyridyl ou leurs mélanges, en particulier la triphénylphosphine et/ou le mercaptobenzimidazole.

4. Utilisation selon l'une des revendications 1 à 2, **caractérisée en ce que** ledit complexe à base de cuivre comprend de plus un composé organique halogéné.

5. Utilisation selon la revendication 4, dans laquelle ledit composé organique halogéné est un composé à base de brome et/ou un composé aromatique.

6. Utilisation selon l'une des revendications 4 ou 5, **caractérisée en ce que** ledit composé organique halogéné aromatique est choisi parmi le decabromediphenyl, decabromodiphenyl ether, les oligomères de bromo ou chloro styrène, le polydibromostyrene, le tetrabromobisphenyl-A, les dérivés de tetrabisphenyl-A, tels que les dérivés epoxy, et les dérivés de chloro dimethanedibenzo(a,e)cyclooctène et leurs mélanges.

7. Utilisation selon l'une revendications 4 à 6, **caractérisée en ce que** le ratio molaire cuivre:halogène est compris de 1 :1 à 1 :3000, notamment de 1 :2 à 1 :100, en particulier de 1:1,5 à 1:15.

8. Utilisation selon la revendication 7, **caractérisée en ce que** ledit complexe à base de cuivre et ledit composé organique halogéné sont sous la forme d'un mélange maitre.

9. Utilisation selon l'une quelconque des revendications 1 à 8, **caractérisée en ce que** le polyamide semi-cristallin

est choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone, les copolyamides 11/12 ayant soit plus de 90 % de motifs 11 soit plus de 90 % de motifs 12, les polyphtalamides et les polyamides comprenant au moins un motif minoritaire issu de la polycondensation d'une diamine avec un acide gras polymérisé, en particulier un dimère d'acide gras.

**10.** Utilisation selon l'une quelconque des revendications 1 à 9, **caractérisée en ce que** la polyoléfine est un copolymère élastomère de l'éthylène de préférence choisi parmi un copolymère éthylène/propylène (EPR) greffé anhydride maléique, un copolymère éthylène/butylène greffé anhydride maléique, un copolymère éthylène/héxène greffé anhydride maléique, un copolymère éthylène/octène greffé anhydride maléique, et un copolymère éthylène/(méth)acrylate d'alkyle comprenant une fonction anhydride maléique.

**11.** Utilisation selon l'une quelconque des revendications 1 à 10, **caractérisée en ce que** le plastifiant est le N-butyl benzène sulfonamide (BBSA).

**12.** Utilisation selon l'une quelconque des revendications 1 à 11, **caractérisée en ce que** le catalyseur est choisi parmi l'acide phosphorique, l'acide phosphoreux ($H_3PO_3$), l'acide hypophosphoreux ($H_3PO_2$), ou un mélange de ceux-ci.

**13.** Utilisation selon la revendication 12, **caractérisée en ce que** la quantité de catalyseur représente jusqu'à 3000 ppm, et de préférence entre 50 et 1000 ppm, par rapport à la quantité de polyamide.

**14.** Utilisation selon l'une quelconque des revendications 1 à 13, **caractérisée en ce que** la composition comprend en outre au moins un additif choisi parmi les modifiants chocs, les colorants, les pigments, les azurants et les stabilisants UV.

**15.** Composition comprenant :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'au moins une polyoléfine comprenant une fonction époxy, anhydride ou acide, introduite par greffage ou par copolymérisation, la polyoléfine étant avantageusement un copolymère élastomère de l'éthylène, qui est de préférence choisi parmi un copolymère éthylène/propylène (EPR), un copolymère éthylène/butylène, un copolymère éthylène/hexène, un copolymère éthylène/octène et un copolymère éthylène/(méth)acrylate d'alkyle, et
- de 3 à 20 % en poids, de préférence de 5 à 13 % en poids, d'au moins un plastifiant
- de 0,05 à 2% en poids, de préférence de 0,1 à 1% en poids d'au moins un stabilisant à base de complexe de cuivre,
- d'au moins un catalyseur,

ladite composition étant dépourvue d'halogénure de métal alcalin et d'oligo- ou poly-carbodiimide.

**16.** Procédé de préparation d'une composition telle que définie dans la revendication 15, comprenant la mise en contact :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'une polyoléfine comprenant une fonction époxy, anhydride ou acide, introduite par greffage ou par copolymérisation, la polyoléfine étant avantageusement un copolymère élastomère de l'éthylène, qui est de préférence choisi parmi un copolymère éthylène/propylène (EPR), un copolymère éthylène/butylène, un copolymère éthylène/hexène, un copolymère éthylène/octène et un copolymère éthylène/(méth)acrylate d'alkyle, et
- de 3 à 20 % en poids, de préférence de 5 à 13 % en poids, d'un plastifiant
- de 0,05 à 2% en poids, de préférence de 0,1 à 1% en poids d'un stabilisant à base de complexe de cuivre,
- d'au moins un catalyseur,

ladite composition étant dépourvue d'halogénure de métal alcalin et d'oligo- ou poly-carbodiimide.

**17.** Tuyau destiné à être utilisé pour l'exploitation des gisements de pétrole ou de gaz sous la mer (offshore) comprenant au moins une couche (1) obtenue à partir d'une composition comprenant :

- de 70 à 91 % en poids, de préférence de 75 à 87 % en poids, d'au moins un polyamide semi-cristallin présentant un nombre moyen d'atomes de carbone par atome d'azote noté Nc supérieur ou égal à 7,5, avantageusement compris entre 9 et 18 et préférentiellement compris entre 10 et 18,
- de 5 à 25 % en poids, avantageusement de 8 à 15%, de préférence de 8 à 12 % en poids, d'au moins une polyoléfine comprenant une fonction époxy, anhydride ou acide, introduite par greffage ou par copolymérisation, la polyoléfine étant avantageusement un copolymère élastomère de l'éthylène, qui est de préférence choisi parmi un copolymère éthylène/propylène (EPR), un copolymère éthylène/butylène, un copolymère éthylène/hexène, un copolymère éthylène/octène et un copolymère éthylène/(méth)acrylate d'alkyle, et
- de 3 à 20 % en poids, de préférence de 5 à 13 % en poids, d'au moins un plastifiant
- de 0,05 à 2% en poids, de préférence de 0,1 à 1% en poids d'un stabilisant à base de complexe de cuivre,
- d'au moins un catalyseur,

ladite composition étant dépourvue d'halogénure de métal alcalin et d'oligo- ou poly-carbodiimide.

**18.** Tuyau selon la revendication 17, **caractérisé en ce que** le polyamide semi-cristallin est choisi parmi le PA11, le PA12, les polyamides aliphatiques résultant de la condensation d'une diamine aliphatique ayant de 6 à 12 atomes de carbone et d'un diacide aliphatique ayant de 9 à 12 atomes de carbone, les copolyamides 11/12 ayant soit plus de 90 % de motifs 11 soit plus de 90 % de motifs 12 et les polyphtalamides et les polyamides comprenant au moins un motif minoritaire issu de la polycondensation d'une diamine avec un acide gras polymérisé, en particulier un dimère d'acide gras.

**19.** Tuyau selon la revendication 17 ou 18, **caractérisé en ce qu'**il comprend en outre au moins une deuxième couche (2) constituée d'un ou plusieurs éléments métalliques, la deuxième couche (2) étant en contact avec le pétrole ou le gaz véhiculé, la couche (1) étant disposée autour de la deuxième couche (2) de manière à assurer l'étanchéité.

**20.** Tuyau selon l'une quelconque des revendications 17 à 19, **caractérisé en ce qu'**il comprend en outre au moins une troisième couche (3) en métal ou en matériau composite, la troisième couche (3) étant disposée autour de la couche (1) de manière à compenser la pression interne du pétrole ou du gaz véhiculé.

**21.** Tuyau selon l'une quelconque des revendications 17 à 20, **caractérisé en ce qu'**il comprend en outre au moins une quatrième couche (4) de protection disposée autour de la couche (1) ou, le cas échéant, de la troisième couche (3).

**22.** Tuyau selon l'une quelconque des revendications 17 à 21, **caractérisé en ce que** ledit tuyau est flexible.

## Patentansprüche

**1.** Verwendung einer Zusammensetzung, umfassend:

- von 70 bis 91 Gewichts-%, vorzugsweise von 75 bis 87 Gewichts-%, mindestens ein semikristallines Polyamid, das eine durchschnittliche Anzahl von Kohlenstoffatomen pro als Nc notiertes Stickstoffatom von größer oder gleich 7,5, vorteilhafterweise im Bereich zwischen 9 und 18 und vorzugsweise im Bereich zwischen 10 und 18 aufweist,
- von 5 bis 25 Gewichts-%, vorteilhafterweise von 8 bis 15 %, vorzugsweise von 8 bis 12 Gewichts-%, mindestens ein Polyolefin, umfassend eine durch Pfropfung oder Copolymerisation eingeführte Epoxid-, Anhydrid- oder Säurefunktion, und
- von 3 bis 20 Gewichts-%, vorzugsweise von 4 bis 12 Gewichts-%, mindestens einen Weichmacher,
- von 0,05 bis 5 Gewichts-%, vorzugsweise von 0,05 bis 1 Gewichts-%, vorzugsweise von 0,1 bis 1 Gewichts-%, mindestens einen Stabilisator auf Kupferkomplexbasis,
- mindestens einen Katalysator,

wobei die Zusammensetzung frei ist von Alkalimetallhalogenid und Oligo- oder Polycarbodiimid,
als Dichtungsschicht in einem Rohr, das Erdöl oder Gas enthält, wobei dieses Rohr bei der Ausbeutung von Erdöl- oder Gasvorkommen unter dem Meer (offshore) verwendet wird.

2. Verwendung nach Anspruch 1, **dadurch gekennzeichnet, dass** das Rohr flexibel ist.

3. Verwendung nach Anspruch 1 oder 2, **dadurch gekennzeichnet, dass** der Komplex auf Kupferbasis einen Liganden umfasst, der ausgewählt ist aus Phosphinen, insbesondere Triphenylphosphinen, Mercaptobenzimidazol, EDTA, Acetylacetonat, Glycin, Ethylendiamin, Oxalat, Diethylendiamin, Triethylentetramin, Pyridin, Diphosphon und Dipyridyl oder deren Mischungen, insbesondere Triphenylphosphin und/oder Mercaptobenzimidazol.

4. Verwendung nach einem der Ansprüche 1 bis 2, **dadurch gekennzeichnet, dass** der Komplex auf Kupferbasis ferner eine halogenierte organische Verbindung umfasst.

5. Verwendung nach Anspruch 4, wobei die halogenierte organische Verbindung eine Verbindung auf Brombasis und/oder eine aromatische Verbindung ist.

6. Verwendung nach einem der Ansprüche 4 oder 5, **dadurch gekennzeichnet, dass** die halogenierte organische aromatische Verbindung ausgewählt ist aus Decabromdiphenyl, Decabromdiphenylether, Brom- oder Chlorstyrol-Oligomeren, Polydibromstyrol, Tetrabrombisphenyl-A, Tetrabisphenyl-A-Derivaten, wie Epoxidderivate, Chlordimethandibenzo(a,e)cycloocten-Derivaten und deren Mischungen.

7. Verwendung nach einem der Ansprüche 4 bis 6, **dadurch gekennzeichnet, dass** das Molverhältnis Kupfer:Halogen von 1:1 bis 1:3000, besonders von 1:2 bis 1:100, insbesondere von 1:1,5 bis 1:15 beträgt.

8. Verwendung nach Anspruch 7, **dadurch gekennzeichnet, dass** der Komplex auf Kupferbasis und die halogenierte organische Verbindung in Form einer Grundmischung vorliegen.

9. Verwendung nach einem der Ansprüche 1 bis 8, **dadurch gekennzeichnet, dass** das semikristalline Polyamid ausgewählt ist aus PA11, PA12, aliphatischen Polyamiden, die aus der Kondensation eines aliphatischen Diamins mit 6 bis 12 Kohlenstoffatomen und einer aliphatischen Disäure mit 9 bis 12 Kohlenstoffatomen resultieren, wobei die Copolyamide 11/12 entweder mehr als 90 % Einheiten 11 oder mehr als 90 % Einheiten 12 aufweisen, wobei die Polyphthalamide und Polyamide mindestens eine Minderheitseinheit umfassen, die aus der Polykondensation eines Diamins mit einer polymerisierten Fettsäure, insbesondere einem Fettsäuredimer, stammt.

10. Verwendung nach einem der Ansprüche 1 bis 9, **dadurch gekennzeichnet, dass** das Polyolefin ein elastomeres Ethylen-Copolymer ist, das vorzugsweise ausgewählt ist aus einem maleinsäureanhydridgepfropften Ethylen-Propylen(EPR)-Copolymer, einem maleinsäureanhydridgepfropften Ethylen-Butylen-Copolymer, einem maleinsäureanhydridgepfropften Ethylen-Hexen-Copolymer, einem maleinsäureanhydridgepfropften Ethylen-Octen-Copolymer, und einem eine Maleinsäureanhydridfunktion umfassenden Ethylen-Alkyl(meth)acrylat-Copolymer.

11. Verwendung nach einem der Ansprüche 1 bis 10, **dadurch gekennzeichnet, dass** der Weichmacher N-Butylbenzolsulfonamid (BBSA) ist.

12. Verwendung nach einem der Ansprüche 1 bis 11, **dadurch gekennzeichnet, dass** der Katalysator ausgewählt ist aus Phosphorsäure, phosphoriger Säure ($H_3PO_3$), hypophosphoriger Säure ($H_3PO_2$) oder einer Mischung von diesen.

13. Verwendung nach Anspruch 12, **dadurch gekennzeichnet, dass** die Menge an Katalysator bezogen auf die Menge an Polyamid bis 3000 ppm und vorzugsweise zwischen 50 und 1000 ppm beträgt.

14. Verwendung nach einem der Ansprüche 1 bis 13, **dadurch gekennzeichnet, dass** die Zusammensetzung des Weiteren mindestens ein Additiv umfasst, ausgewählt aus Schlagzähmodifikatoren, Farbstoffen, Pigmenten, Aufhellern und UV-Stabilisatoren.

15. Zusammensetzung, umfassend:

- von 70 bis 91 Gewichts-%, vorzugsweise von 75 bis 87 Gewichts-%, mindestens ein semikristallines Polyamid, das eine durchschnittliche Anzahl von Kohlenstoffatomen pro als Nc notiertes Stickstoffatom von größer oder gleich 7,5, vorteilhafterweise im Bereich zwischen 9 und 18 und vorzugsweise im Bereich zwischen 10 und 18 aufweist,
- von 5 bis 25 Gewichts-%, vorteilhafterweise von 8 bis 15 %, vorzugsweise von 8 bis 12 Gewichts-%, mindestens

ein Polyolefin, das eine durch Pfropfung oder Copolymerisation eingeführte Epoxid-, Anhydrid- oder Säurefunktion umfasst, wobei das Polyolefin vorteilhafterweise ein elastomeres Ethylen-Copolymer ist, das vorzugsweise ausgewählt ist aus einem Ethylen-Propylen(EPR)-Copolymer, einem Ethylen-Butylen-Copolymer, einem Ethylen-Hexen-Copolymer, einem Ethylen-Octen-Copolymer und einem Ethylen-Alkyl(meth)acrylat-Copolymer, und
- von 3 bis 20 Gewichts-%, vorzugsweise von 5 bis 13 Gewichts-%, mindestens einen Weichmacher
- von 0,05 bis 2 Gewichts-%, vorzugsweise von 0,1 bis 1 Gewichts-%, mindestens einen Stabilisator auf Kupferkomplexbasis,
- mindestens einen Katalysator,

wobei die Zusammensetzung frei ist von Alkalimetallhalogenid und Oligo- oder Polycarbodiimid.

**16.** Verfahren zur Herstellung einer Zusammensetzung wie nach Anspruch 15 definiert, umfassend das In-Kontakt-Bringen:

- von 70 bis 91 Gewichts-%, vorzugsweise von 75 bis 87 Gewichts-%, mindestens einem semikristallinen Polyamid, das eine durchschnittliche Anzahl von Kohlenstoffatomen pro als Nc notiertem Stickstoffatom von größer als oder gleich 7,5, vorteilhafterweise im Bereich zwischen 9 und 18 und vorzugsweise im Bereich zwischen 10 und 18 aufweist,
- von 5 bis 25 Gewichts-%, vorteilhafterweise von 8 bis 15 %, vorzugsweise von 8 bis 12 Gewichts-%, einem Polyolefin umfassend eine durch Pfropfung oder Copolymerisation eingeführte Epoxid-, Anhydrid- oder Säurefunktion, wobei das Polyolefin vorteilhafterweise ein elastomeres Ethylen-Copolymer ist, das vorzugsweise ausgewählt ist aus einem Ethylen-Propylen(EPR)-Copolymer, einem Ethylen-Butylen-Copolymer, einem Ethylen-Hexen-Copolymer, einem Ethylen-Octen-Copolymer und einem Ethylen-Alkyl(meth)acrylat-Copolymer, und
- von 3 bis 20 Gewichts-%, vorzugsweise von 5 bis 13 Gewichts-%, einem Weichmacher
- von 0,05 bis 2 Gewichts-%, vorzugsweise von 0,1 bis 1 Gewichts-%, von einem Stabilisator auf Kupferkomplexbasis,
- mindestens einem Katalysator,

wobei die Zusammensetzung frei ist von Alkalimetallhalogenid und Oligo- oder Polycarbodiimid.

**17.** Rohr, das dazu bestimmt ist, bei der Ausbeutung von Erdöl- oder Gasvorkommen unter dem Meer (offshore) verwendet zu werden, umfassend mindestens eine Schicht (1), die ausgehend von einer Zusammensetzung erhalten wurde, die Folgendes umfasst:

- von 70 bis 91 Gewichts-%, vorzugsweise von 75 bis 87 Gewichts-%, mindestens ein semikristallines Polyamid, das eine durchschnittliche Anzahl von Kohlenstoffatomen pro als Nc notiertes Stickstoffatom von größer als oder gleich 7,5, vorteilhafterweise im Bereich zwischen 9 und 18 und vorzugsweise im Bereich zwischen 10 und 18 aufweist,
- von 5 bis 25 Gewichts-%, vorteilhafterweise von 8 bis 15 %, vorzugsweise von 8 bis 12 Gewichts-%, mindestens ein Polyolefin, umfassend eine durch Pfropfung oder Copolymerisation eingeführte Epoxid-, Anhydrid- oder Säurefunktion, wobei das Polyolefin vorteilhafterweise ein elastomeres Ethylen-Copolymer ist, das vorzugsweise ausgewählt ist aus einem Ethylen-Propylen(EPR)-Copolymer, einem Ethylen-Butylen-Copolymer, einem Ethylen-Hexen-Copolymer, einem Ethylen-Octen-Copolymer und einem Ethylen-Alkyl(meth)acrylat-Copolymer, und
- von 3 bis 20 Gewichts-%, vorzugsweise von 5 bis 13 Gewichts-%, mindestens einen Weichmacher
- von 0,05 bis 2 Gewichts-%, vorzugsweise von 0,1 bis 1 Gewichts-%, einen Stabilisator auf Kupferkomplexbasis,
- mindestens einen Katalysator,

wobei die Zusammensetzung frei ist von Alkalimetallhalogenid und Oligo- oder Polycarbodiimid.

**18.** Rohr nach Anspruch 17, **dadurch gekennzeichnet, dass** das semikristalline Polyamid ausgewählt ist aus PA11, PA12, aliphatischen Polyamiden, die aus der Kondensation eines aliphatischen Diamins mit 6 bis 12 Kohlenstoffatomen und einer aliphatischen Disäure mit 9 bis 12 Kohlenstoffatomen resultieren, wobei die Copolyamide 11/12 entweder mehr als 90 % Einheiten 11 oder mehr als 90 % Einheiten 12 aufweisen, und wobei die Polyphthalamide und Polyamide mindestens eine Minderheitseinheit umfassen, die aus der Polykondensation eines Diamins mit einer polymerisierten Fettsäure, insbesondere einem Fettsäuredimer, stammt.

**19.** Rohr nach Anspruch 17 oder 18, **dadurch gekennzeichnet, dass** es des Weiteren mindestens eine zweite Schicht

(2) umfasst, bestehend aus einem oder mehreren Metallelementen, wobei die zweite Schicht (2) mit dem transportierten Erdöl oder Gas in Kontakt steht, wobei die Schicht (1) um die zweite Schicht (2) herum auf eine Weise angeordnet ist, um die Dichtheit zu gewährleisten.

**20.** Rohr nach einem der Ansprüche 17 bis 19, **dadurch gekennzeichnet, dass** es des Weiteren mindestens eine dritte Schicht (3) aus Metall oder Verbundwerkstoff umfasst, wobei die dritte Schicht (3) um die Schicht (1) herum auf eine Weise angeordnet ist, um den Innendruck des transportierten Erdöls oder Gases zu kompensieren.

**21.** Rohr nach einem der Ansprüche 17 bis 20, **dadurch gekennzeichnet, dass** es des Weiteren mindestens eine vierte Schicht (4) zum Schutz umfasst, die um die Schicht (1) oder gegebenenfalls um die dritte Schicht (3) herum angeordnet ist.

**22.** Rohr nach einem der Ansprüche 17 bis 21, **dadurch gekennzeichnet, dass** das Rohr flexibel ist.

## Claims

**1.** Use of a composition comprising:

- from 70 to 91% by weight, preferably from 75 to 87% by weight, of at least one semi-crystalline polyamide having an average number of carbon atoms per nitrogen atom denoted by Nc greater than or equal to 7.5, advantageously comprised between 9 and 18, and preferably comprised between 10 and 18,
- from 5 to 25% by weight, advantageously from 8 to 15%, preferably from 8 to 12% by weight, of at least one polyolefin comprising an epoxy, anhydride or acid function, introduced by grafting or by copolymerization, and
- from 3 to 20% by weight, preferably from 4 to 12% by weight, of at least one plasticizer,
- from 0.05 to 5% by weight, preferably from 0.05 to 1% by weight preferably from 0.1 to 1% by weight of at least one copper complex-based stabilizer,
- of at least one catalyst,

said composition being free of alkali metal halide and oligo- or poly-carbodiimide,
as an impermeable layer in a pipe containing oil or gas, this pipe being used in the exploitation of oil or gas deposits under the sea (offshore).

**2.** Use according to claim 1, **characterized in that** said pipe is flexible.

**3.** Use according to claim 1 or 2, **characterized in that** said copper-based complex comprises a ligand selected from phosphines, in particular triphenylphosphines, mercaptobenzimidazole, EDTA, acetylacetonate, glycine, ethylene diamine, oxalate, diethylene diamine, triethylene tetraamine, pyridine, diphosphone and dipyridyl or mixtures thereof, in particular triphenylphosphine and/or mercaptobenzimidazole.

**4.** Use according to any one of claims 1 to 2, **characterized in that** said copper-based complex further comprises a halogenated organic compound.

**5.** Use according to claim 4, wherein said halogenated organic compound is a bromine-based compound and/or an aromatic compound.

**6.** Use according to one of claims 4 or 5, **characterized in that** said aromatic halogenated organic compound is selected from decabromediphenyl, decabromodiphenyl ether, bromosyrene or chlorostyrene oligomers, polydibromostyrene, tetrabromobisphenyl-A, tetrabisphenyl-A derivatives, such as epoxy derivatives, and chlorodimethanedibenzo(a,e)cyclooctene derivatives and mixtures thereof.

**7.** Use according to any one of claims 4 to 6, **characterized in that** the molar ratio of copper to halogen is from 1:1 to 1:3,000, in particular from 1:2 to 1:100, in particular from 1:1.5 to 1:15.

**8.** Use according to claim 7, **characterized in that** said copper-based complex and said halogenated organic compound are in the form of a masterbatch.

**9.** Use according to any one of claims 1 to 8, **characterized in that** the semi-crystalline polyamide is selected from

PA11, PA12, aliphatic polyamides resulting from the condensation of an aliphatic diamine having 6 to 12 carbon atoms and an aliphatic diacid having 9 to 12 carbon atoms, copolyamides 11/12 having either more than 90% of units 11 or more than 90% of units 12, polyphthalamides and polyamides comprising at least one minor unit derived from the polycondensation of a diamine with a polymerized fatty acid, in particular a fatty acid dimer.

**10.** Use according to any one of claims 1 to 9, **characterized in that** the polyolefin is an elastomeric copolymer of ethylene, preferably selected from an ethylene/propylene copolymer (EPR) grafted with maleic anhydride, an ethylene/butylene copolymer grafted with maleic anhydride, an ethylene/hexene copolymer grafted with maleic anhydride, and an ethylene/octene copolymer grafted with maleic anhydride, and an ethylene/alkyl (meth)acrylate copolymer comprising a maleic anhydride function.

**11.** Use according to any one of claims 1 to 10, **characterized in that** the plasticizer is N-butyl benzene sulfonamide (BBSA).

**12.** Use according to any one of claims 1 to 11, **characterized in that** the catalyst is selected from phosphoric acid, phosphorous acid ($H_3PO_3$), hypophosphorous acid ($H_3PO_2$), or a mixture thereof.

**13.** Use according to claim 12, **characterized in that** the amount of catalyst represents up to 3,000 ppm, and preferably between 50 and 1,000 ppm, relative to the amount of polyamide.

**14.** Use according to any one of claims 1 to 13, **characterized in that** the composition further comprises at least one additive selected from impact modifiers, dyes, pigments, brighteners and UV stabilizers.

**15.** Composition comprising:

- from 70 to 91% by weight, preferably from 75 to 87% by weight, of at least one semi-crystalline polyamide having an average number of carbon atoms per nitrogen atom denoted by Nc greater than or equal to 7.5, advantageously between 9 and 18, and preferably between 10 and 18,
- from 5 to 25% by weight, advantageously from 8 to 15%, preferably from 8 to 12% by weight, of a polyolefin comprising an epoxy, anhydride or acid function, introduced by grafting or copolymerization, the polyolefin advantageously being an elastomeric copolymer of ethylene, which is preferably selected from an ethylene/propylene copolymer (EPR), an ethylene/butylene copolymer, an ethylene/hexene copolymer, an ethylene/octene copolymer and an alkyl ethylene/(meth)acrylate copolymer, and
- from 3 to 20% by weight, preferably from 5 to 13% by weight, of a plasticizer
- from 0.05 to 2% by weight, preferably from 0.1 to 1% by weight of at least one copper complex-based stabilizer,
- of at least one catalyst,

said composition being free of alkali metal halide and oligo- or poly-carbodiimide.

**16.** Method for the preparation of a composition as defined in claim 15, including the placing into contact of:

- from 70 to 91% by weight, preferably from 75 to 87% by weight, of at least one semi-crystalline polyamide having an average number of carbon atoms per nitrogen atom denoted by Nc greater than or equal to 7.5, advantageously comprised between 9 and 18, and preferably comprised between 10 and 18,
- from 5 to 25% by weight, advantageously from 8 to 15%, preferably from 8 to 12% by weight, of at least one polyolefin comprising an epoxy, anhydride or acid function, introduced by grafting or copolymerization, the polyolefin advantageously being an elastomeric copolymer of ethylene, which is preferably selected from an ethylene/propylene copolymer (EPR), an ethylene/butylene copolymer, an ethylene/hexene copolymer, an ethylene/octene copolymer and an alkyl ethylene/(meth)acrylate copolymer, and
- from 3 to 20% by weight, preferably from 5 to 13% by weight of at least one plasticizer
- from 0.05 to 2% by weight, preferably from 0.1 to 1% by weight of a copper complex-based stabilizer,
- of at least one catalyst,

said composition being free of alkali metal halide and oligo- or poly-carbodiimide.

**17.** Pipe for use in the exploitation of oil or gas deposits under the sea (offshore) comprising at least one layer (1) obtained from a composition comprising:

- from 70 to 91% by weight, preferably 75 at 87% by weight, of at least one semi-crystalline polyamide having an average number of carbon atoms per nitrogen atom denoted by Nc greater than or equal to 7.5, advantageously between 9 and 18, and preferably between 10 and 18,
- from 5 to 25% by weight, advantageously 8 to 15%, preferably 8 to 12% by weight, of at least one polyolefin comprising an epoxy, anhydride or acid functional group, introduced by grafting or copolymerization, the polyolefin advantageously being an elastomeric copolymer of ethylene, which is preferably selected from an ethylene/propylene copolymer (EPR), an ethylene/butylene copolymer, an ethylene/hexene copolymer, an ethylene/octene copolymer and an alkyl ethylene/(meth)acrylate copolymer, and
- from 3 to 20% by weight, preferably 5 to 13% by weight, of at least one plasticizer
- from 0.05 to 2% by weight, preferably 0.1 to 1% by weight of a copper complex-based stabilizer,
- of at least one catalyst,

said composition being free of alkali metal halide and oligo- or polycarbodiimide.

**18.** Pipe according to claim 17, **characterized in that** the semi-crystalline polyamide is selected from PA11, PA12, the aliphatic polyamides resulting from the condensation of an aliphatic diamine having 6 to 12 carbon atoms and an aliphatic diacid having 9 to 12 carbon atoms, the copolyamides 11/12 having either more than 90% of units 11 or more than 90% of units 12 and polyphthalamides and polyamides comprising at least one minor unit derived from the polycondensation of a diamine with a polymerized fatty acid, in particular a fatty acid dimer.

**19.** Pipe according to claim 17 or 18, **characterized in that** it further comprises at least one second layer (2) consisting of one or more metallic elements, the second layer (2) being in contact with the oil or the gas conveyed, the layer (1) being arranged around the second layer (2) so as to ensure impermeability.

**20.** Pipe according to any one of claims 17 to 19, **characterized in that** it further comprises at least one third layer (3) of metal or composite material, the third layer (3) being arranged around the layer (1) so as to compensate for the internal pressure of the oil or gas conveyed.

**21.** Pipe according to any one of claims 17 to 20, **characterized in that** it further comprises at least one protective fourth layer (4) arranged around the layer (1) or, where appropriate, the third layer (3).

**22.** Pipe according to any one of claims 17 to 21, **characterized in that** said pipe is flexible.

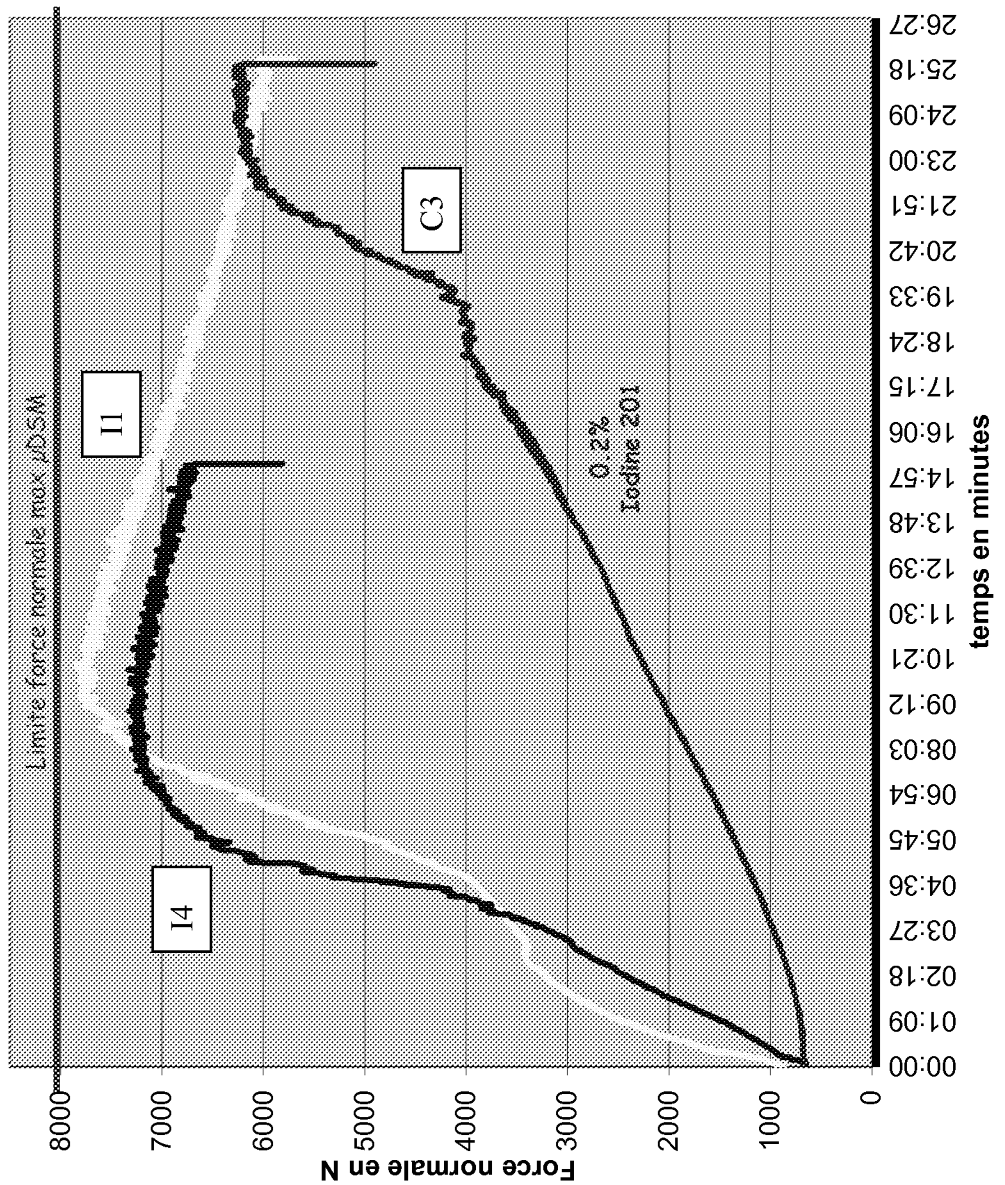

Limite force normale max μDSM
I4
I1
C3
0.2%
Iodine 201
Force normale en N
8000
7000
6000
5000
4000
3000
2000
1000
0
00:00
01:09
02:18
03:27
04:36
05:45
06:54
08:03
09:12
10:21
11:30
12:39
13:48
14:57
16:06
17:15
18:24
19:33
20:42
21:51
23:00
24:09
25:18
26:27
temps en minutes


Figure 1

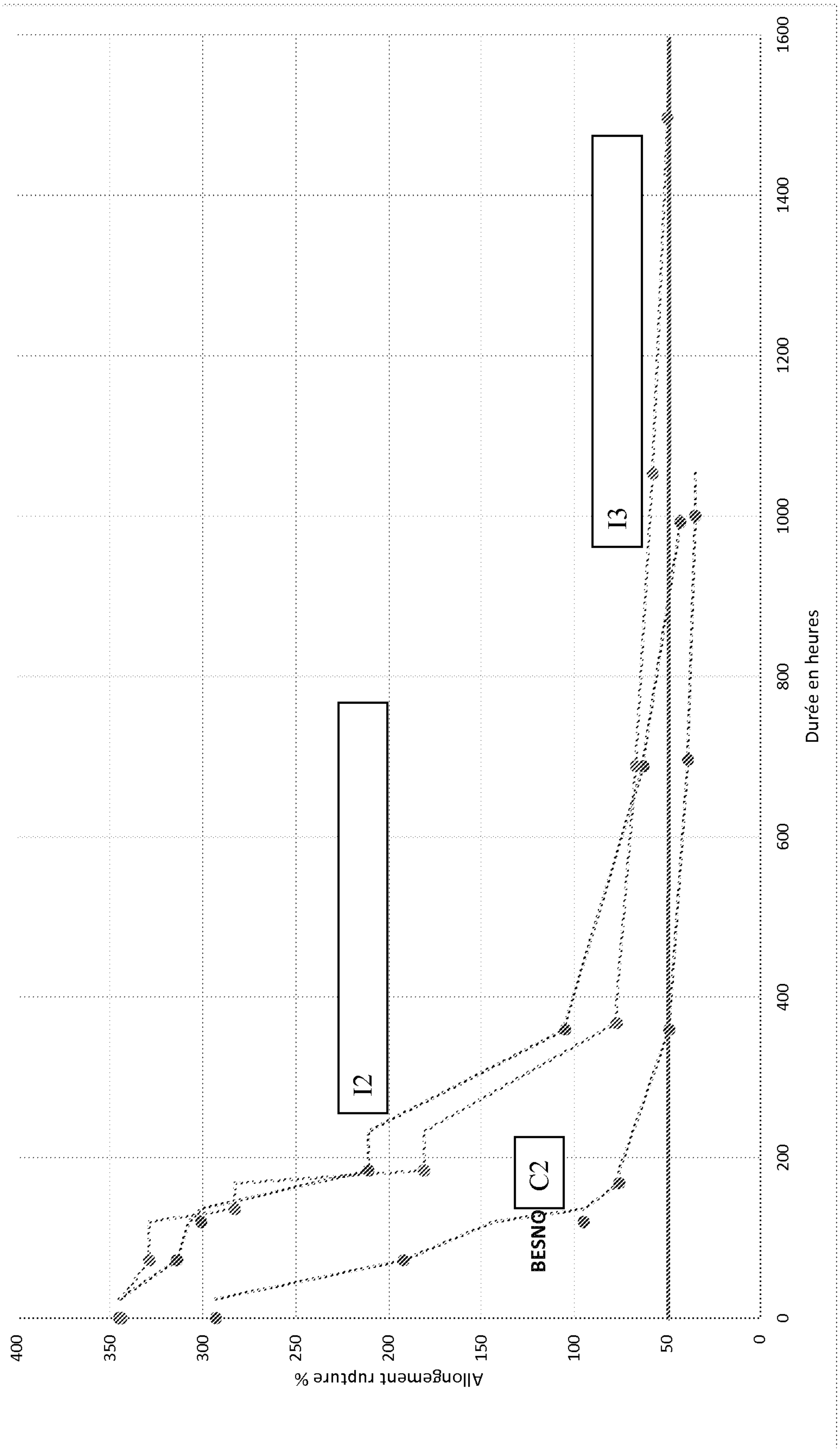
Allongement rupture %
Durée en heures
0
50
100
150
200
250
300
350
400
0
200
400
600
800
1000
1200
1400
1600
I2
I3
C2
BESNO

Figure 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20030220449 A
- WO 08122743 A
- US 2008314471 A
- US 5360888 A
- US 20130171388 A
- CA 2347258
- US 3505285 A
- CA 02347258


### Littérature non-brevet citée dans la description


- Cycloaliphatic Aminés. Encyclopaedia of Chemical Technology, Kirk-Othmer. 1992, 386-405
- Ullmann's Encyclopedia of Industrial Chemistry. vol. A 23, 282-288
- Plastics Additives : An A-Z Reference. Chapman & Hall, 1998
- **C.A. CRUZ, JR.** *Impacts modifiers : (2) Modifiers for engineering thermoplastics*
- **ANTEC.** Specila Areas - Additives and Modifiers-, Novel Acrylic. *Plastics : Annual Technical Conference,* 2002, vol. 3